Europäisches Patentamt

European Patent Office

Office européen des brevets

(19)

(11) EP 0 616 453 B1

(12) FASCICULE DE BREVET EUROPEEN

(45) Date de publication et mention
de la délivrance du brevet:
**31.05.2000 Bulletin 2000/22**

(51) Int. Cl.[7]: **H04L 27/22**, H04L 1/00

(21) Numéro de dépôt: **94200593.5**

(22) Date de dépôt: **09.03.1994**

(54) **Récepteur de signaux modulés en sauts de phase et différentiellement codés**

Empfänger für differenziel kodierte PSK Signale

Receiver for differentially encoded PSK signals

(84) Etats contractants désignés:
**DE FR GB IT**

(30) Priorité: **17.03.1993 FR 9303088**

(43) Date de publication de la demande:
**21.09.1994 Bulletin 1994/38**

(73) Titulaire:
**Koninklijke Philips Electronics N.V.**
**5621 BA Eindhoven (NL)**

(72) Inventeur: **Lauer, Vincent**
**F-75008 Paris (FR)**

(74) Mandataire:
**Landousy, Christian et al**
**Société Civile S.P.I.D.**
**156, Boulevard Haussmann**
**75008 Paris (FR)**

(56) Documents cités:
**EP-A- 0 045 260**     **EP-A- 0 449 146**

• **IEEE TRANSACTIONS ON COMMUNICATIONS, vol.81, no.10, Octobre 1983, NEW YORK US pages 1124 - 1132 DUNHAM & TZOU 'Performance bounds for convolutional codes with digital Viterbi decoders in Gaussian noise'**
• **PROAKIS 'Digital Communications' 1989, MCGRAW - HILL, NEW YORK, US * page 454 - page 459 ***
• **ELECTRONICS AND COMMUNICATIONS IN JAPAN, vol.70, no.3, Mars 1987, NEW YORK US pages 54 - 63 MIYAKE ET AL. 'Performance of a coded 8PSK modem with a Viterbi decoder using simplified metric calculation'**

**EP 0 616 453 B1**

**Description**

L'invention concerne un récepteur de signaux numériques qui ont subi successivement à l'émission un codage de canal, un codage différentiel et une affectation des signaux numériques codés résultants à des symboles d'une constellation, le récepteur comprenant des moyens de décodage différentiel qui calculent des métriques à partir de symboles reçus et des moyens de décodage de canal pour délivrer des signaux numériques décodés à partir des métriques calculées.

Les techniques de communication par transmission aérienne ou par câble font appel à une modulation d'une ou plusieurs porteuses à l'aide de symboles codés numériquement. Parmi ces techniques, on utilise préférentiellement une modulation différentielle pour laquelle la phase d'un symbole à émettre est codée par rapport à la phase du symbole précédent à émettre. Ceci présente l'avantage à la réception de décoder des symboles reçus en déterminant des différences de phase intersymboles. Les données binaires à émettre subissent généralement différents traitements destinés à assurer une fiabilité de transmission dans des conditions de transmission généralement perturbées. Parmi ceux-ci on effectue souvent un codage convolutif suivi d'un entrelacement temporel/fréquentiel des symboles. On peut également effectuer un codage en blocs.

Un tel traitement est décrit dans le document FR-A-2 639 495 dans le cas d'une application à une transmission par multiporteuses. Pour ne considérer, dans ce document que l'aspect se rapportant à l'invention, il faut indiquer qu'au niveau du récepteur, on effectue une démodulation différentielle des symboles reçus, suivi d'un désentrelacement temps/fréquence et d'un décodage à maximum de vraisemblance dit décodage de Viterbi.

La démodulation différentielle décrite consiste, à partir d'une suite de symboles reçus $r_0$, $r_1...r_N$, à générer une suite $r'_1...r'_N$ telle que

$$r'_k = r_k \, r^*_{k-1} \quad o\grave{u} \quad r^*_{k-1}$$

désigne le complexe conjugué de $r_{k-1}$, et k un indice courant.

Pour chaque symbole reçu $r_k$, à partir de la suite $r'_1...r'_N$, on détermine d'une part une partie réelle $Re(r'_k)$ qui est une métrique à laquelle on associe un bit codé d'information et on détermine d'autre part une partie imaginaire $Im(r'_k)$ qui est une métrique à laquelle on associe un autre bit codé d'information. Les suites de métriques ainsi constituées subissent ensuite un désentrelacement suivi d'un décodage à décisions fines qui restitue les bits d'information initiale. Dans le cas d'un codage convolutif, on utilise un décodeur de Viterbi.

Mais ces métriques sont des métriques approchées ce qui fait que le décodage ne délivre pas un résultat optimal.

Un des buts de l'invention consiste à améliorer les performances d'un récepteur mettant en oeuvre de tels mécanismes de décodage de symboles.

Ce but est atteint avec un récepteur dans lequel les moyens de décodage différentiel comprennent des premiers moyens pour estimer, pour chaque symbole reçu, une phase de rotation subie par la constellation et pour rétablir ledit symbole reçu dans sa phase originelle, et des seconds moyens pour calculer des métriques optimales à partir de symboles reçus rétablis dans leur phase originelle.

En déterminant, pour chaque symbole sa phase originelle et des métriques optimales, on obtient ainsi un résultat optimal en sortie du décodeur à décisions fines. Ainsi l'invention apporte un accroissement substantiel des performances.

Pour accroître encore les performances, dans un mode particulier de réalisation on détermine un bruit moyen apparaissant sur plusieurs symboles émis précédemment au symbole en cours de décodage. Il peut s'agir de symboles émis avant et après le symbole en cours de décodage s'il existe des moyens pour retarder le décodage du symbole en cours. Pour cela le récepteur comprend des moyens pour calculer une puissance moyenne de bruit, le module du symbole courant étant normalisé par rapport au bruit moyen. Pour le calcul subséquent des métriques optimales, il est possible de calculer en outre une amplitude moyenne déterminée sur une suite de symboles et de normaliser cette amplitude moyenne par rapport au bruit moyen.

Les mesures se rapportant à la phase originelle de chaque symbole, aux symboles normalisés par rapport au bruit moyen et aux amplitudes moyennes de symboles peuvent être obtenues en programmant convenablement un calculateur ou à l'aide d'unités dédiées. Les moyens de calcul de métriques optimales peuvent comprendre une mémoire stockant des métriques précalculées. La mémoire est alors adressée par les parties réelles et imaginaires des symboles rétablis dans leur phase originelle.

L'invention peut être mise en oeuvre aussi bien avec des modulations à monoporteuse qu'avec des modulations à multiporteuses par exemple les modulations à multiporteuses par répartition multiplexées de fréquences orthogonales (OFDM).

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : une représentation schématique d'un récepteur pour un décodage différentiel avec désentrelacement et décodage à décisions fines.
Figure 2 : un schéma des moyens pour rétablir un symbole reçu dans sa phase originelle.
Figure 3 : un schéma des moyens pour rétablir un symbole reçu dans sa phase originelle ainsi que pour déterminer un bruit moyen et une amplitude moyenne et pour normaliser le module du symbole par rapport au bruit.
Figure 4 : un schéma des moyens de décodage différentiel.

L'invention est décrite ci-après dans le cas préférentiel où il existe un entrelacement et un désentrelacement respectivement à l'émission et à la réception. Dans certaines situations, ils peuvent ne pas exister.

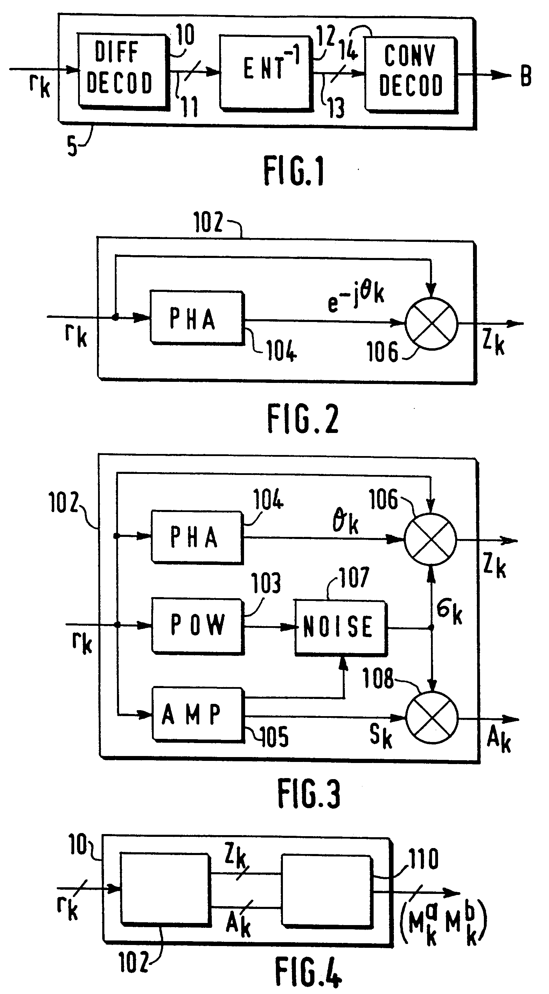

La figure 1 représente un récepteur 5 comprenant une unité 10 de décodage différentiel DIFF DECOD, un désentrelaceur 12 $ENT^{-1}$ et un décodeur 14 DECOD à décisions fines. L'unité 10 de décodage différentiel reçoit des symboles $r_k$ et délivre des métriques (bus 11). Ces métriques sont soumises à un désentrelacement temporel/fréquentiel pour fournir des métriques désentrelacées (bus 13) qui sont décodées par le décodeur 14 pour fournir une suite de bits décodés B.

Selon l'invention, l'unité 10 de décodage différentiel délivre des métriques optimales

$$M_k^a \ et \ M_k^b$$

qui se substituent respectivement à $Re(r'_k)$ et $Im(r'_k)$. Ceci nécessite de connaître la phase originelle des symboles reçus, contrairement à l'art antérieur où seule la différence de phase entre deux symboles consécutifs était prise en compte. L'unité 10 comprend donc (figure 4) une unité 102 de calcul de phase et de correction de la phase des symboles reçus et une unité 110 de calcul de métriques optimales.

L'unité 102 est une boucle de verrouillage de phase (figure 2). Elle délivre des symboles reçus $z_k$ recalés en phase. Dans un exemple de réalisation elle comporte une unité 104 d'estimation de phase et un multiplieur 106 effectuant le rétablissement du symbole reçu dans sa phase originelle avec :

$$z_k = r_k . e^{-j\theta k} \tag{1}$$

où $\theta k$ correspond à la rotation de phase de la constellation. A titre d'exemple, considérons le cas d'une estimation de phase pour des symboles émis selon un standard DAB (Digital Audio Broadcasting). Dans ce cas, à l'émission, la modulation différentielle équivaut à effectuer un codage différentiel suivi d'une affectation binaire de bits codés à des symboles d'une constellation QPSK, puis à effectuer une rotation de $\pi/4$ de cette constellation. Dans ce cas, l'unité 104 calcule pour chaque symbole une estimation $\theta_k$ de la rotation de phase par la formule récurrente :

$$\theta_k = \pi/4 + \theta_{k-1} + \lambda . \alpha_k \tag{2}$$

où $\alpha_k$ est la phase du symbole

$$r_k . e^{-j(\theta_{k-1} + \pi/4)}$$

ramenée à l'intervalle $[-\pi/4, \pi/4]$ par un modulo $\pi/2$, et $\lambda$ est un coefficient de convergence.

Lorsque le canal est soumis à des fluctuations nécessitant un suivi du bruit de canal, l'unité 102 de récupération de phase peut mettre en oeuvre d'une part une mesure de bruit, celui-ci étant caractérisé par sa variance $\sigma$ et/ou d'autre part une mesure d'une amplitude moyenne S du signal déterminée sur une suite de symboles reçus. Dans ce cas, l'unité 102 délivre une estimation $A_k$ de l'amplitude moyenne $S_k$ mesurée lors de la réception du symbole $r_k$, l'amplitude $S_k$ étant normalisée par rapport au bruit avec :

$$A_k = S_k / \sigma_k \tag{3}$$

où $\sigma_k$ est une estimation de la variance du bruit. Dans ce cas (figure 3), l'unité 102 tient compte du calcul de bruit pour normaliser le symbole reçu $z_k$ recalé en phase tel que :

$$(4) \qquad z_k = r_k . e^{-j\theta k}/\sigma_k$$

Pour mesurer un bruit moyen, l'unité 102 comprend une unité 105 AMP de mesure d'amplitude moyenne $S_k$ et une unité 103 POW de mesure de puissance du signal. Les amplitudes moyennes et les puissances respectivement mesurées par les unités 105 et 103 servent à calculer un bruit moyen dans une unité 107 NOISE de mesure de bruit. Cette moyenne est effectuée sur une suite récurrente de plusieurs symboles. L'unité 107 fournit une mesure de la variance $\sigma_k$ du bruit. Un mélangeur 108 reçoit $\sigma_k$ et $S_k$ et fournit alors l'amplitude $A_k$ normalisée par rapport au bruit tel que $A_k = S_k/\sigma_k$. L'unité 10 de décodage différentiel peut ne pas déterminer une amplitude moyenne normalisée par rapport au bruit, auquel cas le mélangeur 108 n'existe pas.

Les déterminations de $z_k$ et éventuellement de $A_k$ peuvent être obtenues également par une unité 102 qui comprend un calculateur convenablement programmé pour effectuer les calculs d'une au moins des équations (1) (2) (3) (4).

Les symboles $z_k$ et les amplitudes moyennes normalisées $A_k$ sont ensuite utilisés par une unité 110 de calcul de métriques. L'unité 10 de décodage différentiel (figure 4) comprend ainsi l'unité 102 et l'unité 110 de calcul de métriques

$$(M_k^a, \ M_k^b) .$$

A un bit transmis est associée une métrique. Dans le cas d'une modulation QPSK avec codage de Gray et codage différentiel, un bit

$$e_k^a$$

était associé à $Re(r'_k)$ et un autre bit

$$e_k^b$$

était associé à $Im(r'_k)$ dans le cadre de l'art antérieur. Dans le cadre de l'invention,

$$e_k^a$$

est associé à

$$M_k^a \ et \ e_k^b \ à \ M_k^b.$$

La métrique

$$M_k^a$$

est définie comme le logarithme du rapport entre la probabilité de recevoir $z_{k-1}$ et $z_k$ sachant que

$$e_k^a$$

vaut 1, et la probabilité de recevoir $z_{k-1}$ et $z_k$ sachant que

$$e_k^a$$

vaut 0 :

$$M_k^a = \log \left( \frac{P(z_k, z_{k-1} \mid e_k^a = 1)}{P(z_k, z_{k-1} \mid e_k^a = 0)} \right) \qquad (5)$$

$$M_k^b$$

est défini par analogie.

Le calcul montre que cette métrique a pour valeur, vu la modulation considérée :

$$M_k^a = \log \left( \sum_{n=0}^{3} [C(k,n,0) + C(k,n,1)] \right) - \log \left( \sum_{n=0}^{3} [C(k,n,2) + C(k,n,3)] \right)$$

$$M_k^b = \log \left( \sum_{n=0}^{3} [C(k,n,0) + C(k,n,3)] \right) - \log \left( \sum_{n=0}^{3} [C(k,n,2) + C(k,n,1)] \right) \qquad (6)$$

avec :

$$C(k,n,p) = \exp \left( -\frac{1}{2} \left( \left| z_{k-1} - Ae^{i(n\frac{\pi}{2} + \frac{\pi}{4})} \right|^2 + \left| z_k - Ae^{i(n\frac{\pi}{2} + \frac{\pi}{4} + p\frac{\pi}{2})} \right|^2 \right) \right) \qquad (7)$$

Dans le cas où l'amplitude moyenne $A_k$ n'est pas fournie par l'unité 102, une valeur constante lui est affectée et la même formule est appliquée.

Dans la version complète du système, l'unité 110 reçoit pour chaque symbole $r_k$ les parties imaginaires et réelles $Im(z_k)$, $Re(z_k)$ du symbole $z_k$ corrigé en phase et normalisé par rapport au bruit, ainsi que la valeur $A_k$ de l'amplitude moyenne normalisée par rapport au bruit.

L'unité 110 doit alors calculer les métriques optimales.

Dans un premier mode de réalisation, la métrique est calculée par un processeur de traitement du signal. L'algorithme de calcul est détaillé ci-après pour l'exemple correspondant au standard DAB.

L'algorithme utilise un tableau u à 2x4 éléments, un tableau C à 4x4 éléments, et deux tableaux a et b à une dimension à 4 éléments définis par : a[0] = 1, a[1] = 0, a[2] = 0, a[3] = 1 b[0] = 1, b[1] = 1, b[2] = 0, b[3] = 0.

A la réception du premier symbole, le processeur calcule les valeurs :

$$u[0,0] = \exp \left( \frac{1}{2} \left( Re(z_0) - A/\sqrt{2} \right)^2 \right)$$

$$u[1,0] = \exp \left( \frac{1}{2} \left( Re(z_0) + A/\sqrt{2} \right)^2 \right)$$

$$u[0,1] = \exp \left( \frac{1}{2} \left( Im(z_0) - A/\sqrt{2} \right)^2 \right)$$

$$u[1,1] = \exp \left( \frac{1}{2} \left( Im(z_0) + A/\sqrt{2} \right)^2 \right)$$

Ensuite, à chaque symbole $z_k$ reçu, le processeur effectue les cinq opérations suivantes :

étape 1 :
calcul de :

$$u[0,2] = \exp\left(\frac{1}{2}\left(Re(z_k) - A/\sqrt{2}\right)^2\right)$$

$$u[1,2] = \exp\left(\frac{1}{2}\left(Re(z_k) + A/\sqrt{2}\right)^2\right)$$

$$u[0,3] = \exp\left(\frac{1}{2}\left(Im(z_k) - A/\sqrt{2}\right)^2\right)$$

$$u[1,3] = \exp\left(\frac{1}{2}\left(Im(z_k) + A/\sqrt{2}\right)^2\right)$$

étape 2 : calcul, pour des indices i et j variant de 0 à 3, des valeurs du tableau c :

$$c[i,j] = u[a[i],0] \times u[b[i],1] \times u[a[j],2] \times u[b[j],3]$$

étape 3 : calcul des nombres suivants :

$$F^a = \sum_{n=0}^{3} (c[n,n] + c[n,(n+1)\bmod 4])$$

$$G^a = \sum_{n=0}^{3} (c[n,(n+2)\bmod 4] + c[n,(n+3)\bmod 4])$$

$$F^b = \sum_{n=0}^{3} (c[n,n] + c[n,(n+3)\bmod 4])$$

$$G^b = \sum_{n=0}^{3} (c[n,(n+2)\bmod 4] + c[n,(n+1)\bmod 4])$$

étape 4 : calcul des métriques :

$$M^a = \log(F^a/G^a)$$

$$M^b = \log(F^b/G^b)$$

étape 5 : recopie de u[.,2] dans u[.,0] et de u[.,3] dans u[.,1] où le point (.) dans le tableau signifie chaque indice du tableau.

Dans un autre mode particulier de réalisation de l'unité 110 de calcul de métriques, celle-ci est constituée d'une mémoire dans laquelle sont préalablement stockées des métriques précalculées.

A chaque symbole reçu un entier est généré de la manière suivante : les valeurs $R_e(z_{k-1})$, $I_m(z_{k-1})$, $R_e(z_k)$, $I_m(z_k)$, $A_k$ sont quantifiées sur un nombre limité de bits puis concaténées. A chaque valeur de l'entier ainsi obtenu correspond un intervalle de quantification pour chacun de ces cinq nombres réels. Chaque entier constitue une adresse mémoire à laquelle est stockée une valeur précalculée des deux métriques $M^a$ et $M^b$. Cette valeur est calculée conformément à l'équation (6), dans laquelle $A_k$ est remplacé par une valeur typique dans l'intervalle de quantification, et les fonctions exponentielles sont remplacées par leurs intégrales sur les intervalles de quantification de $R_e(z_{k-1})$, $I_m(z_{k-1})$, $R_e(z_k)$, $I_m(z_k)$.

L'entier courant généré après quantification et concaténation est utilisé pour adresser la mémoire et obtenir sur le bus de données les valeurs concaténées des métriques.

Dans le cas de signaux conformes au standard DAB, l'invention fournit un gain de 1,2 dB par rapport aux techniques conventionnelles pour des codes convolutifs ayant un rendement 1/2 entre le flux binaire entrant et le flux binaire sortant. Ce gain peut atteindre 2,3 dB pour des codes convolutifs ayant un rendement plus élevé.

**Revendications**

1. Récepteur (5) de signaux numériques qui ont subi successivement à l'émission un codage de canal, un codage différentiel et une affectation des signaux numériques codés résultants à des symboles d'une constellation, le récepteur comprenant des moyens (10) de décodage différentiel qui calculent des métriques à partir de symboles reçus, et des moyens (14) de décodage de canal pour délivrer des signaux numériques décodés à partir des métriques calculées, caractérisé en ce que les moyens de décodage différentiel (10) comprennent des premiers moyens (102) pour estimer, pour chaque symbole reçu, une phase de rotation subie par la constellation et pour rétablir ledit symbole reçu dans sa phase originelle, et des seconds moyens (110) pour calculer des métriques optimales à partir de symboles reçus rétablis dans leur phase originelle.

2. Récepteur selon la revendication 1 caractérisé en ce que les moyens de décodage différentiel comprennent des troisièmes moyens (103, 107) pour calculer une puissance moyenne de bruit affectant les symboles et pour normaliser chaque symbole reçu par rapport au bruit moyen.

3. Récepteur selon une des revendications 1 ou 2 caractérisé en ce que les moyens de décodage différentiel comprennent des quatrièmes moyens (105) pour mesurer sur plusieurs symboles une amplitude moyenne normalisée par rapport au bruit moyen et pour calculer lesdites métriques optimales à partir desdits symboles rétablis et des amplitudes moyennes normalisées.

4. Récepteur selon une des revendications 1 à 3 caractérisé en ce que les premiers moyens et/ou les seconds moyens et/ou les troisièmes moyens et/ou les quatrièmes moyens comprennent un calculateur convenablement programmé.

5. Récepteur selon une des revendications 1 à 4 caractérisé en ce que les seconds moyens comprennent une mémoire stockant des métriques précalculées.

6. Récepteur selon une des revendications 1 à 5 caractérisé en ce que les symboles numériques étant émis soit sur monoporteuse soit sur multiporteuses, le récepteur comprend des moyens de décodage différentiel pour monoporteuse ou pour multiporteuses.

**Claims**

1. A receiver (5) for digital signals which have successively undergone, on transmission, a channel coding and a differential coding and which resulting coded digital signals have been assigned to symbols of a constellation, the receiver comprising differential decoding means (10) which calculate metrics in response to received symbols, and channel decoding means (14) for producing decoded digital signals in response to the calculated metrics, characterized in that the differential decoding means (10) comprise first means (102) for estimating for each received symbol a rotation phase which the constellation undergoes and for restoring said received symbol to its original phase, and second means (110) for calculating optimum metrics in response to received symbols that have been restored to their original phase.

2. Receiver as claimed in Claim 1, characterized in that the differential decoding means comprise third means (103, 107) for calculating a mean noise output which influences the symbols and for normalizing each received symbol relative to the mean noise.

3. Receiver as claimed in one of the Claims 1 or 2, characterized in that the differential decoding means comprise fourth means (105) for measuring over various symbols a mean amplitude which is normalized relative to the mean noise and for calculating said optimum metrics on the basis of said restored symbols and the normalized mean amplitudes.

4. Receiver as claimed in one of the Claims 1 to 3, characterized in that the first means and/or the second means and/or the third means and/or the fourth means comprise a suitably programmed computer.

5. Receiver as claimed in one of the Claims 1 to 4, characterized in that the second means comprise a memory in which precalculated metrics are stored.

6. Receiver as claimed in one of the Claims 1 to 5, characterized in that the digital symbols which are transmitted either on a monocarrier or on multicarriers, the receiver comprises differential decoding means for the monocarrier or for multicarriers.

**Patentansprüche**

1. Empfänger (5) numerischer Signale, die bei der Übertragung der Reihe nach einer Kanalkodierung unterworfen wurden, eine differentiale Kodierung und eine Zuteilung der daraus resultierenden numerischen kodierten Signale an Symbole einer Konstellation, wobei der Empfänger Mittel (10) zur differentialen Dekodierung enthält, die anhand der erhaltenen Symbole Metriken berechnen, und Kanaldekodiermittel (14), um anhand der berechneten Metriken dekodierte numerische Signale abzugeben, dadurch gekennzeichnet, daß die differentialen Dekodiermittel (10) für jedes erhaltene Symbol erste Mittel (102) zum Bewerten einer von der Konstellation erfahrenen Rotationsphase und zum Zurückbringen des besagten erhaltenen Symbols in seine Originalphase und zweite Mittel ()110 zum Berechnen der optimalen Metriken anhand der erhaltenen, in ihre Originalphase zurückgebrachten Symbole enthält.

2. Empfänger nach Anspruch 1, dadurch gekennzeichnet, daß die differentialen Dekodiermittel dritte Mittel (103,107) zum Berechnen einer durchschnittlichen Stärke des die Symbole beeinträchtigenden Geräusches und zur Normalisierung jedes Symbols in bezug auf das durchschnittliche Geräusch haben.

3. Empfänger nach einem der Ansprüche 1 oder 2, dadurch gekennzeichnet, daß die differentialen Dekodiermittel vierte Mittel (105) zum Messen über mehrere Symbole einer durchschnittlichen normalisierten Amplitude in bezug auf das durchschnittliche Geräusch und zum Berechnen der besagten optimalen Metriken anhand der besagten wiederhergestellten und Symbole und der durchschnittlichen normalisierten Amplituden haben.

4. Empfänger nach einem der Ansprüche 1 oder 3, dadurch gekennzeichnet, daß die ersten Mittel und/oder zweiten Mittel und/oder dritten Mittel und/oder vierten Mittel einen dementsprechend programmierten Rechner enthalten.

5. Empfänger nach einem der Ansprüche 1 oder 4, dadurch gekennzeichnet, daß die zweiten Mittel einen Speicher zur Aufnahme der vorausberechneten Metriken haben.

6. Empfänger nach einem der Ansprüche 1 oder 5, dadurch gekennzeichnet, daß die numerischen Symbole über Einfachträger oder Mehrfachträger übertragen werden, der Empfänger differentiale Dekodiermittel für Einfachträger oder für Mehrfachträger enthält.

FIG.1

FIG.2

FIG.3

FIG.4